# EUROPEAN PATENT APPLICATION

(11) **EP 2 871 793 A1**
(43) Date of publication of application: **13.05.2015**
(21) Application number: 13290278.4
(22) Date of filing: 12.11.2013
(51) Int. Cl.: H04L 1/00, H04B 3/54, H04B 17/00

(54) **A device and method for diagnosing a power grid communications network**

(71) Applicant: ALCATEL LUCENT, 92100 Boulogne-Billancourt (FR)
(72) Inventor: Gacanin, Harris, 2018 Antwerpen (BE)
(74) Representative: Plas, Axel Ivo Michel

(57) **Abstract**

A device (200) for diagnosing a power grid communications network (100) used to exchange sensor information and/or control messages for at least one power grid application, comprises:
- a performance parameter collection engine (201) to collect performance parameter values for the power grid communications network (100);
- a diagnosis engine (202) to calculate from the collected performance parameter values one or more optimal physical layer parameter value for the power grid communications network (100); and
- a configuration engine (203) to dynamically configure one or more configurable physical layer parameter with the one or more optimal physical layer parameter value.

## Description

### Field of the Invention

The present invention generally relates to diagnosing and troubleshooting a power grid communications network or smart grid ICT network at the physical layer level. The invention in particular concerns a device and method that enables remote and automated diagnosis of the physical layer of a power line communications (PLC) network that is used as smart grid ICT network for one or more smart grid application.

### Background of the Invention

To support the exchange of sensor information and control messages in relation to a power grid, i.e. an electricity distribution network, a communication network is required. This communication network is called the power grid communications network or smart grid ICT network, and the information sent over this communication network comprises sensor and control messages used in various power grid applications such as electricity distribution automation, advanced energy consumption metering, demand side management, grid-to-home communications, home/building energy management, home automation, vehicle-to-charging station communications, vehicle-to-grid communications, etc.

Although several physical layer technologies are available for the power grid communication network such as copper wiring, optical fibre and wireless technologies, power line communication or PLC is the most common solution, in particular for the low voltage (LV) and medium voltage (MV) segments of the power grid, since it significantly reduces the deployment costs as no new wireless infrastructure like GSM, WiMax, ... or wireline infrastructure like FTTH, DSL, ... must be installed. Moreover, ITU-T has defined a standard specification for smart grid applications, G.hnem, that supports power lines as the physical layer communications medium for controlling power utilities. G.hnem further supports popular higher layer protocols like Ethernet, IPv4 and IPv6 as a result of which G.hnem compliant power grid communications networks can easily be integrated with IP-based networks. This enhances the integration of electricity networks and communications networks enabling to exercise a higher level of monitoring and controlling the power grid.

Since the power grid communications network conveys for instance data used for energy consumption measurements, it is of utmost importance that the underlying telecommunication infrastructure is reliable and stable with minimal outages. However, depending on the power grid segment, power lines as physical layer medium for the power line communication network pose several problems. In the low voltage (LV) grid segment, medium voltage (MV) grid segment, and high voltage (HV) grid segment, the useful frequencies are different and consequently sensor signals or control signals have to travel in different frequency bands. Further, the communication channel typically suffers from high attenuation due to the length of the power line cables and the presence of imperfections in the power line cables. The branching of segments for instance introduces reflections with strong frequency selectivity resulting for instance from impedance mismatches, bridged taps, etc. Interference and noise is permanently present in power lines. Depending on the power grid segment, LV, MV or HV, disturbers affect the channel frequencies differently. The channel problems are most severe in LV PLC networks. Strong alien interference may cause low quality of the link and jeopardize the transfer of metering data, reporting data and management data for power grid applications. This is in particular the case when energy meters are located within the consumer's home and data transfer over power lines may be affected by different home appliances and home communication networks. At present, energy operators are not able to cope with these problems.

Summarizing, there is a strong demand for tools and methods that enable to diagnose and increase the reliability of power grid communications networks, in particular when power lines, which inherently suffer from several problems, constitute the physical layer medium.

Available tools for diagnosing the smart grid ICT network's physical layer such as Alcatel-Lucent's M2M Communication Control advertised at the URL:
http://www.alcatel-lucent.com/products/machine-to-machine-communication-controller
and Alcatel-Lucent's M2M Service Management R.2.0 advertised at the URL:
http://www.alcatel-lucent.com/products/motive-service-management-platform offer some simple monitoring functions but do not allow sophisticated communication network assessment and repair. The monitoring functions in existing tools entail monitoring of modems through ping/trace tests, monitoring device/sensor activation, monitoring firmware manipulation, monitoring of the communication network. The root cause or potential disturber is not identified and troubleshooting at the physical layer is not possible.

It is consequently an objective of the present invention to provide a device and method for diagnosing a power grid communications network that resolves the above-identified shortcomings of existing solution. More particularly, it is an objective of the present invention to provide a device and method that enables to increase the reliability and stability of power lines when used as physical layer medium for the power grid communications network.

### Summary of the Invention

According to the present invention, the above defined objectives are realized by the device for diagnosing a power grid communications network used to exchange sensor information and/or control messages for at least one power grid application, the device being defined by claim 1, comprising:
- a performance parameter collection engine adapted to collect parameter values for one or more measurable performance parameter of the power grid communications network;
- a diagnosis engine adapted to calculate from the parameter values one or more optimal physical layer parameter value for one or more configurable physical layer parameter of the power grid communications network; and
- a configuration engine adapted to dynamically configure the one or more configurable physical layer parameter with the one or more optimal physical layer parameter value.

Thus, in the device according to the invention, a performance parameter collection engine collects certain physical layer performance parameter values such as the signal-to-noise ratio or bit error rate, that are indicative for the performance of the physical layer of the power grid. A diagnosis engine then calculates from the performance parameter values optimized physical layer parameter values, such as coding rates, bit loadings, etc., and the physical layer parameters are configured towards the optimized values by a configuration engine. The physical layer performance parameter collection may be triggered by a problem or the parameter collection may take place at scheduled moments. It is further noticed that the threestage dynamic configuration of physical layer parameters for the power grid communications network may be iterated until a stable stage is reached. The physical layer diagnostics and troubleshooting according to the invention may be implemented at different places, e.g. at the operator's remote management centre or locally at a smart grid control centre. Depending on the location, different physical layer parameters may be accessed remotely via protocols such as OMCI (OpenManage Client Instrumentation), SMTP (Simple Mail Transfer Protocol), etc.

According to an optional aspect of the device for diagnosing a power grid communications network according to the present invention, defined by claim 2, the one or more measurable performance parameter comprise at least one of:
- the channel frequency response or CFR;
- the signal to noise ratio or SNR;
- the noise;
- the cyclic redundancy code or CRC;
- the throughput; and
- the bit error rate or BER.

According to a further optional aspect of the device for diagnosing a power grid communications network according to the present invention, defined by claim 3, the one or more configurable physical layer parameter comprise at least one of:
- the coding rate;
- the bit loading; and
- the transmit power.

Further optionally, as defined by claim 4, the device for diagnosing a power grid communications network according to the present invention may comprise:
- a network parameter collection engine adapted to collect parameter values for one or more network layer parameter of the power grid communications network.

Hence, to increase the evaluation reliability, certain network layer parameters like a device identification may be used to exploit the conditional probability that links some of the collected physical layer performance parameters with the network identification parameters. The network parameters may for instance be used to compensate errors introduced by network devices of certain vendors.

As specified by claim 5, the one or more network layer parameter may comprise at least one of:
- an Internet Protocol address of a device;
- a device identification; and
- a network identification.

According to a further optional aspect of the device for diagnosing a power grid communications network, defined by claim 6, the diagnosis engine comprises a Bayesian network engine configured to infer one or more target physical layer impairments.

Indeed, in an embodiment of the device according to the present invention, the physical layer performance parameters may be used as inputs to a Bayesian network engine to infer a number of targeted physical-layer problems.

In a preferred embodiment of the device for diagnosing a power grid communications network according to the present invention, defined by claim 7, the diagnosis engine further comprises an inference engine to derive a physical layer impairment root cause.

Indeed, whereas a Bayesian network can use conditional probabilities between the physical layer performance parameters and network layer parameters to infer a number of physical layer problems, further interference by an inference engine can derive the root cause of the physical layer impairment, e.g. impulse noise, stationary noise, channel frequency attenuation, etc.

In the device for diagnosing a power grid communications network according to the present invention, as defined by claim 8, the inference engine may be configured to identify impulsive noise as the physical layer impairment root cause in case of a signal to noise ratio that is good, a channel frequency response that is good and a bit error rate that is bad.

Thus, the physical layer performance parameters may be discretized according to their values into different ranges. Based on their values, the SNR or signal to noise ratio, the CFR or channel frequency response, and the BER or bit error rate may be classified in one of three possible states: good, medium or bad. For example, the CFR value may be discretized into several regions denoted by 0-10 dB, 10-20 dB, 20-30 dB, etc. Based on that classification, evaluation nodes can assign the CFR value to one out of three states: good, medium, bad. When the evaluation results in a good SNR, a good CFR and a low BER, the root cause of the physical layer problem likely is impulse noise.

In the device for diagnosing a power grid communications network according to the present invention, as defined by claim 9, the inference engine may alternatively or additionally be configured to identify stationary noise as the physical layer impairment root cause in case of a signal to noise ratio that is bad, a channel frequency response that is good and a bit error rate that is good. Thus, possible disturbers in a particular smart grid ICT network segment can be identified.

As explained above, the physical layer performance parameters may be discretized according to their values into different ranges. Based on that classification, evaluation nodes can assign the SNR, CFR and BER values to one out of three states: good, medium, bad. When the evaluation results in a bad SNR, a good CFR and a good BER, the root cause of the physical layer problem likely is stationary noise. Thus, possible disturbers in a particular smart grid ICT network segment can be identified.

In the device for diagnosing a power grid communications network according to the present invention, as defined by claim 10, the inference engine may alternatively or additionally be configured to identify channel frequency attenuation as the physical layer impairment root cause in case of a signal to noise ratio that is bad, a channel frequency response that is bad and a bit error rate that is bad.

As explained above, the physical layer performance parameters may be discretized according to their values into different ranges. Based on that classification, evaluation nodes can assign the SNR, CFR and BER values to one out of three states: good, medium, bad. When the evaluation results in a bad SNR, a bad CFR and a bad BER, the root cause of the physical layer problem likely is too high channel frequency attenuation. Thus, possible disturbers in a particular smart grid ICT network segment can be identified.

In addition to a device for diagnosing a power grid communications network as defined by claim 1, the present invention also relates to a corresponding method for diagnosing a power grid communications network used to exchange sensor information and/or control messages for at least one power grid application, the method being defined by claim 11, comprising:
- collecting parameter values for one or more measurable performance parameter of the power grid communications network;
- calculating from the parameter values one or more optimal physical layer parameter value for one or more configurable physical layer parameter of the power grid communications network; and
- dynamically configuring the one or more configurable physical layer parameter with the one or more optimal physical layer parameter value.

The present invention further also relates to a data processing system as defined by claim 12, comprising means for carrying out the method.

Furthermore, the present invention relates to a computer program as defined by claim 13, comprising software code adapted to perform the method, and to a computer readable storage medium as defined by claim 14, comprising the computer program.

### Brief Description of the Drawings

Fig. 1 illustrates the network architecture of a power grid communications network; and
Fig. 2 is a functional block scheme of an embodiment of the device for diagnosing a power grid communications network according to the present invention.

### Detailed Description of Embodiment(s)

The aim of the present invention is to integrate physical-layer diagnostics and troubleshooting for a power grid communications network. This is achieved by enabling remote diagnostics and re-configuration of the power grid PLC physical layer for the different grid segments. The solution generally consist of PLC physical layer stability assessment, computing optimal physical layer parameter values for the PLC nodes, re-configuring the nodes according to the optimal physical layer parameter values. It is noticed hereby that configuration of the nodes shall typically depend on vendor and device capabilities.

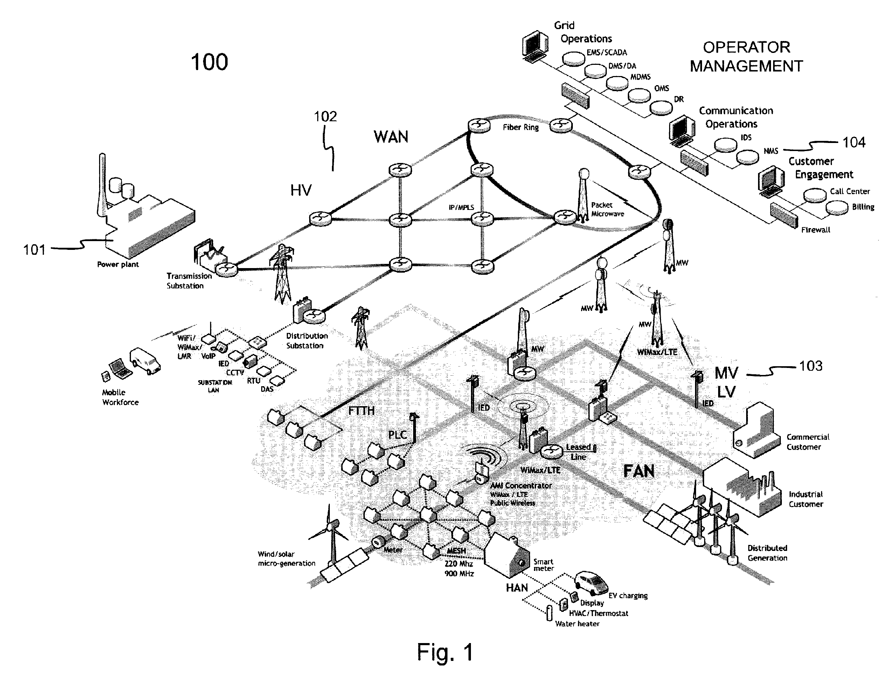

The smart grid ICT network 100 is rather complex and typically consist of different technologies, as is illustrated by Fig. 1. The core high voltage or HV network 102 connected to the power plant 101 is established by optical communications technologies while the medium voltage or MV and the low voltage or LV networks 103 are relying on a variety of technologies such as wireless (LTE, GSM, Wimax), wireline (PLC) and/or fiber-to-the-home (FTTH) technologies. The most common solution is PLC since it allows to exploit the available wired infrastructure as a result of which the deployment costs are drastically reduced. In addition, protocols like Ethernet, IPv4 and IPv6, are supported in PLC based smart grid ICT networks enabling easy integration with other IP-based networks via multi-protocol label switching or MPLS.

The network management system or NMS wherein the PLC physical layer diagnostics and troubleshooting according to the present invention can be implemented may be residing at different locations. Depending on the NMS location, the parameters may be accessed remotely via different protocols such as the OpenManage Client Instrumentation protocol or OMCI, the Simple Mail Transfer Protocol or SMTP, etc., or some proprietary modem parameters such as the channel frequency response or CFR, the signal-to-noise ratio or SNR, etc. may be accessed through proprietary protocols.

In a first scenario, the data aggregation, modeling and actions are defined and computed at the operator remote management center 104. In a second scenario, the data aggregation, modeling and actions are done at a smart grid base station or control center, and then the results are sent to the management center that collects the results for one or several operators. Thus, the implementation of the management platform can be done at a remote location or locally within the substation.

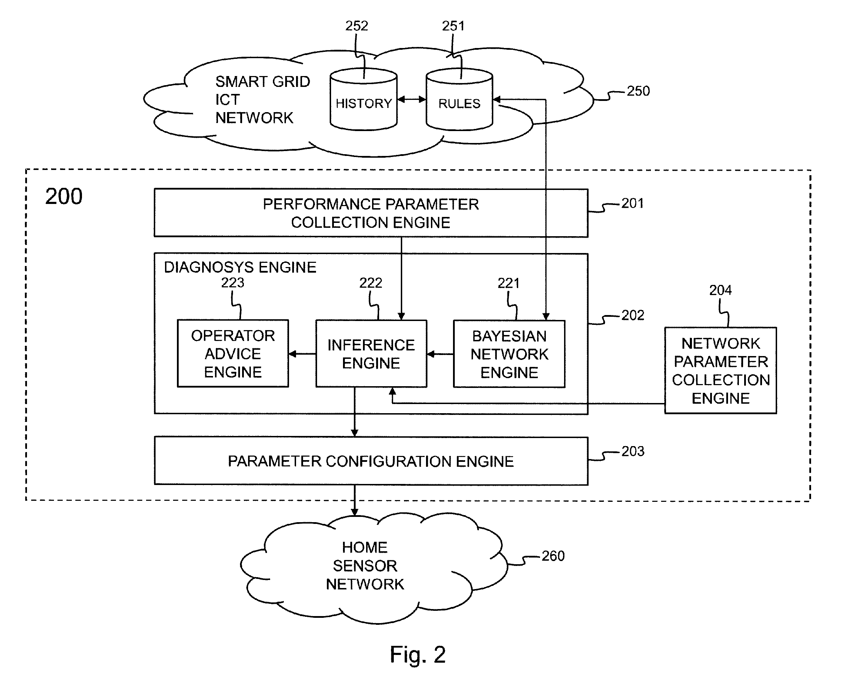

Fig. 2 shows the functional blocks of a device 200 that analyses and troubleshoots the PLC physical layer in accordance with the present invention.:

The smart grid PLC physical layer diagnose tool 200 comprises a performance parameter collection engine 201 for collecting physical layer performance parameters. The physical layer performance parameter collection is either triggered by some problem or is executed according to some schedule. Physical layer performance parameters for instance comprise the channel frequency response or CFR, the signal to noise ratio or SNR, the noise level, etc. The collected performance parameters may also comprise Medium Access Control or MAC layer parameters like the cyclic redundancy code or CRC, the throughput, the bit error rate or BER, etc.

It is noticed however that some of the performance parameters may be derived from the collected parameters. For example, the SNR may be calculated from the CFR and noise.

The smart grid PLC physical layer diagnose tool 200 further comprises a network layer parameter collection engine 204 that collects certain network layer parameters like for instance the IP address, the device ID, the network ID, etc.

As is further shown by Fig. 2, the smart grid PLC physical layer diagnose tool 200 comprises a diagnosis engine 202 that calculates optimal physical layer parameter values, such as the coding rates, the bit loadings, the transmit power, etc. In the embodiment illustrated by Fig. 2, the diagnosis engine 202 contains a Bayesian network 221 that implements a statistical Bayesian network inference algorithm. The algorithm is used to infer the targeted physical layer problems. The performance parameters received from the performance parameter collection engine 201 are used as inputs to the Bayesian network engine 221. The properties of the inference engine should are customized according to a particular operators needs. To increase the evaluation reliability, also the network layer parameters collected by the network layer parameter collection engine 204 are used to exploit the conditional probability, which links some of the performance parameters, i.e., BER, SNR, CFR, etc. with the network layer parameters. As an example, knowledge of the device ID from the network layer can be used to better compensate for errors introduced by a certain vendor of the network devices with respect to some measured physical layer performance parameters.

The network performance parameters are discretized into different ranges. For example, the CFR values can be found within several regions denoted by 0-10 dB, 10-20 dB, etc. In a similar way, it is possible to define BER and SNR discretization. Based on the discretized regions, the measured performance parameters can be in one of three states: good, medium or bad.

The Bayesian network engine 221 uses the knowledge of conditional probabilities between the physical layer parameters collected by the performance parameter collection engine 201 and the network identification parameters collected by the network parameter collection engine 204 to check how the observed performance parameters behave. Based on a combination of those conclusions, further inference is done by inference engine 222 to derive the impairment root cause.

If a device has a good SNR value and a good CFR condition, while the evaluation is performed with a low BER value, the inference engine 222 concludes that the potential problem may be impulse noise. The advice unit 223 shall inform the operator of the impulse noise problem such that possible disturbers in the particular smart grid segment that has been diagnosed, can be identified.

If a device has a bad SNR value and a good CFR condition, while the evaluation is performed with a high BER value, the inference engine 222 concludes that the potential problem may be stationary noise. The advice unit 223 shall inform the operator of the stationary noise problem such that possible disturbers in the particular smart grid segment that has been diagnosed, can be identified.

If a device has a low SNR value and a bad CFR condition, while the evaluation is performed with a low BER value, the inference engine 222 concludes that the potential problem may be high channel frequency attenuation. The advice unit 223 shall inform the operator of the high channel frequency attenuation problem such that possible disturbers in the particular smart grid segment that has been diagnosed, can be identified.

The smart grid PLC physical layer diagnose tool 200 further comprises a configuration engine 203 for dynamic re-configuration of parameters in the smart grid devices. The physical layer configuration parameters can be set by the operator or the end user, but vendors typically do not implement algorithms in their chipsets that enable to make the changes automatically.

It is noticed that collection of performance and network layer parameters, inference with potential physical layer problems, and adaptation of parameters in smart grid devices as described here above may be iterated until a stable stage is reached.

Information about the resolved problem may thereafter be stored in an external center or the information about the problem and the re-action to it may be provided to a cloud service where it is made available to different smart grid operators and/or other intelligent home networks.

The present invention resolves the problem of existing proprietary solutions that cannot deal with the fact that smart grids are multi-vendor communication networks.

The invention further is advantageous in that it identifies low quality communication links in a PLC based smart grid ICT network and it helps during expanding and repair of an existing smart grid ICT network within the different network segments, i.e HV, MV or LV. The analysis can be combined with smart routing at the IP layer to cope with problems in HV, MV and LV PLC segments.

The method according to the invention shall typically be computerimplemented on a data processing system or computing device. A data processing system or computing device that is operated according to the present invention can include a workstation, a server, a laptop, a desktop, a hand-held device, a mobile device, a tablet computer, or other computing device, as would be understood by those of skill in the art.

The data processing system or computing device can include a bus or network for connectivity between several components, directly or indirectly, a memory or database, one or more processors, input/output ports, a power supply, etc. One of skill in the art will appreciate that the bus or network can include one or more busses, such as an address bus, a data bus, or any combination thereof, or can include one or more network links. One of skill in the art additionally will appreciate that, depending on the intended applications and uses of a particular embodiment, multiple of these components can be implemented by a single device. Similarly, in some instances, a single component can be implemented by multiple devices.

The data processing system or computing device can include or interact with a variety of computer-readable media. For example, computer-readable media can include Random Access Memory (RAM), Read Only Memory (ROM), Electronically Erasable Programmable Read Only Memory (EEPROM), flash memory or other memory technologies, CDROM, digital versatile disks (DVD) or other optical or holographic media, magnetic cassettes, magnetic tape, magnetic disk storage or other magnetic storage devices that can be used to encode information and can be accessed by the data processing system or computing device.

The memory can include computer-storage media in the form of volatile and/or nonvolatile memory. The memory may be removable, non-removable, or any combination thereof. Exemplary hardware devices are devices such as hard drives, solid-state memory, optical-disc drives, or the like. The data processing system or computing device can include one or more processors that read data from components such as the memory, the various I/O components, etc.

The I/O ports can allow the data processing system or computing device to be logically coupled to other devices, such as I/O components. Some of the I/O components can be built into the computing device. Examples of such I/O components include a microphone, joystick, recording device, game pad, satellite dish, scanner, printer, wireless device, networking device, or the like.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A device (200) for diagnosing a power grid communications network (100) used to exchange sensor information and/or control messages for at least one power grid application, said device (200) comprising:
- a performance parameter collection engine (201) adapted to collect parameter values for one or more measurable performance parameter of said power grid communications network (100);
- a diagnosis engine (202) adapted to calculate from said parameter values one or more optimal physical layer parameter value for one or more configurable physical layer parameter of said power grid communications network (100); and
- a configuration engine (203) adapted to dynamically configure said one or more configurable physical layer parameter with said one or more optimal physical layer parameter value.

2. A device (200) for diagnosing a power grid communications network (100) according to claim 1, wherein said one or more measurable performance parameter comprise at least one of:
- the channel frequency response or CFR;
- the signal to noise ratio or SNR;
- the noise;
- the cyclic redundancy code or CRC;
- the throughput; and
- the bit error rate or BER.

3. A device (200) for diagnosing a power grid communications network (100) according to claim 1, wherein said one or more configurable physical layer parameter comprise at least one of:
- the coding rate;
- the bit loading; and
- the transmit power.

4. A device (200) for diagnosing a power grid communications network (100) according to claim 1, further comprising:
- a network parameter collection engine (204) adapted to collect parameter values for one or more network layer parameter of said power grid communications network (100).

5. A device (200) for diagnosing a power grid communications network (100) according to claim 4, wherein said one or more network layer parameter comprise at least one of:
- an Internet Protocol address of a device;
- a device identification; and
- a network identification.

6. A device (200) for diagnosing a power grid communications network (100) according to claim 1, wherein said diagnosis engine (202) comprises a Bayesian network engine (221) configured to infer one or more target physical layer impairments.

7. A device (200) for diagnosing a power grid communications network (100) according to claim 1, wherein said diagnosis engine (202) further comprises an inference engine (222) to derive a physical layer impairment root cause.

8. A device (200) for diagnosing a power grid communications network (100) according to claim 7, wherein said inference engine (222) is configured to identify impulsive noise as said physical layer impairment root cause in case of a signal to noise ratio that is good, a channel frequency response that is good and a bit error rate that is bad.

9. A device (200) for diagnosing a power grid communications network (100) according to claim 7, wherein said inference engine (222) is configured to identify stationary noise as said physical layer impairment root cause in case of a signal to noise ratio that is bad, a channel frequency response that is good and a bit error rate that is good.

10. A device (200) for diagnosing a power grid communications network (100) according to claim 7, wherein said inference engine (222) is configured to identify channel frequency attenuation as said physical layer impairment root cause in case of a signal to noise ratio that is bad, a channel frequency response that is bad and a bit error rate that is bad.

11. A method for diagnosing a power grid communications network (100) used to exchange sensor information and/or control messages for at least one power grid application, said method comprising:
- collecting parameter values for one or more measurable performance parameter of said power grid communications network (100);
- calculating from said parameter values one or more optimal physical layer parameter value for one or more configurable physical layer parameter of said power grid communications network (100); and
- dynamically configuring said one or more configurable physical layer parameter with said one or more optimal physical layer parameter value.

12. A data processing system comprising means for carrying out the method of claim 11.

13. A computer program comprising software code adapted to perform the method of claim 11.

14. A computer readable storage medium comprising the computer program of claim 13.
